# EUROPEAN PATENT APPLICATION

(11) **EP 4 339 356 A1**
(43) Date of publication of application: **20.03.2024**
(21) Application number: 21943676.3
(22) Date of filing: 29.06.2021
(51) Int. Cl.: D06F 58/50, D06F 34/14, D06F 34/18

(54) **CONDENSER BLOCKAGE DETECTION METHOD AND APPARATUS, LAUNDRY TREATMENT DEVICE, AND STORAGE MEDIUM**

(30) Priority: 31.05.2021 CN 202110604656; 31.05.2021 CN 202110601718
(71) Applicant: Wuxi Little Swan Electric Co., Ltd., Wuxi, Jiangsu 214028 (CN)
(72) Inventor: SUN, Jiantao, Wuxi, Jiangsu 214028 (CN); BAI, Shuzhao, Wuxi, Jiangsu 214028 (CN); XU, Xiaowen, Wuxi, Jiangsu 214028 (CN)
(74) Representative: RGTH
(86) International application number: PCT/CN2021/103080
(87) International publication number: WO 2022/252319

(57) **Abstract**

A condenser blockage detection method and apparatus, a laundry treatment device, and a computer-readable storage medium. The method comprises: obtaining an initial temperature of a gas in a laundry treatment device and the weight of a load in a tub body (S101); determining the reference condensation efficiency of a condenser on the basis of the initial temperature and the weight of the load (5102); obtaining the actual condensation efficiency of the condenser at a drying stabilization stage (S103); and determining the blockage degree of the condenser according to the reference condensation efficiency and the actual condensation efficiency (S 104).

## Description

### CROSS-REFERENCE TO RELATED APPLICATIONS

This application is filed based on and claims priorities to Chinese Patent application No. 202110604656.4 filed on 31 May 2021 and entitled "CONDENSER BLOCKAGE DETECTION METHOD AND APPARATUS, LAUNDRY TREATMENT DEVICE, AND STORAGE MEDIUM" and Chinese Patent application No. 202110601718.6 filed on 31 May 2021 and entitled "CONDENSER BLOCKAGE DETECTION METHOD AND APPARATUS, LAUNDRY TREATMENT DEVICE, AND STORAGE MEDIUM", the contents of which are hereby incorporated by reference in their entireties.

### TECHNICAL FIELD

The application relates to the technical field of household appliances, and in particular to a blockage detection method and apparatus for a condenser, a laundry treatment device, and a computer-readable storage medium.

### BACKGROUND

With the improvement of people's living standards and the acceleration of working paces, technical development directions of the laundry dryer industry have increasingly tended to be more intelligent, more energy efficient, and more hygienic. The problem of lint blockage of a condenser of the laundry dryer also becomes more and more prominent. In the related art, a filter screen is generally provided at a front end of the condenser to filter lint in circulating air, so as to reduce the lint blockage of the condenser.

The solution of filtering lint by the filter screen still has the following defects: the filter screen does not completely filter lint in the circulating air. After long-term use, lint may still block surfaces of the condenser. A user cannot determine whether the condenser is blocked, and may only clean the condenser regularly, so that the condenser cannot be cleaned timely when it is blocked. Furthermore, after the condenser is blocked with lint, condensation efficiency is reduced, and more water vapor in the circulating air re-enters an inner tub and comes into contact with laundry being dried, prolonging drying duration. Furthermore, accumulation of lint may breed bacteria, which poses a threat to human health.

### SUMMARY

In view of the foregoing, embodiments of the application provide a blockage detection method and apparatus for a condenser, a laundry treatment device, and a computer-readable storage medium.

Technical solutions of the embodiments of the application are implemented as follows.

An embodiment of the application provides a blockage detection method for a condenser, the method is applied to a laundry treatment device, and includes the following operations.

An initial temperature of a gas in the laundry treatment device and weight of a load in a tub body of the laundry treatment device are acquired.

A reference condensation efficiency of the condenser is determined based on the initial temperature and the weight of the load.

An actual condensation efficiency of the condenser at a drying stabilization stage is acquired.

A blockage degree of the condenser is determined according to the reference condensation efficiency and the actual condensation efficiency.

In this way, after the laundry treatment device determines to enter a drying process, the reference condensation efficiency of the condenser is determined according to the initial temperature of the gas in the laundry treatment device and the weight of the load in the tub body of the laundry treatment device. After the drying process enters the drying stabilization stage, the actual condensation efficiency of the condenser is acquired. The blockage degree of the condenser is determined by comparing the reference condensation efficiency to the actual condensation efficiency, so that blockage detection may be achieved without adding other detection apparatuses. A user may determine whether blockages of the condenser need to be cleaned according to the blockage degree, so as to clean blockages timely when the condenser is blocked, and ensure that the condenser operates in an unblocked state, thereby shortening drying duration. Furthermore, blockages may be prevented from contaminating the laundry, so that the laundry treatment device is more energy efficient and more hygienic.

An embodiment of the application provides a laundry treatment device, the laundry treatment device includes a blockage detection apparatus for a condenser, a heating apparatus, a tub body, a humidity detection apparatus, a temperature detection apparatus, the condenser, and a motor.

The heating apparatus is configured to heat gas in the laundry treatment device.

The tub body is provided with an air outlet and an air inlet, and is configured to accommodate to-be-treated laundry.

The humidity detection apparatus is arranged in the tub body, and is configured to detect humidity of the to-be-treated laundry.

The temperature detection apparatus is configured to detect temperature of the gas in the laundry treatment device.

The condenser is configured to condense the gas in the laundry treatment device.

The motor is configured to drive the tub body to rotate.

The blockage detection apparatus for a condenser is configured to control the heating apparatus, the tub body, the humidity detection apparatus, the temperature detection apparatus, the condenser and the motor to implement operations of the above blockage detection method for a condenser.

An embodiment of the application provides a computer-readable storage medium, having stored thereon computer-executable instructions, the computer-executable instructions are configured to perform operations of the above blockage detection method for a condenser.

### BRIEF DESCRIPTION OF THE DRAWINGS

The above and/or additional aspects and advantages of the application will become apparent and readily understood from descriptions of the embodiments with reference to the following drawings, here:
FIG. 1 is a schematic flowchart of implementation of a blockage detection method for a condenser according to an embodiment of the application;
FIG. 2 is a schematic flowchart of implementation of an operation of acquiring an initial temperature and weight of a load in a blockage detection method for a condenser according to an embodiment of the application;
FIG. 3A is a schematic flowchart of implementation of an operation of acquiring an actual condensation efficiency in a blockage detection method for a condenser according to an embodiment of the application;
FIG. 3B is a schematic flowchart of another implementation of an operation of acquiring an actual condensation efficiency in a blockage detection method for a condenser according to an embodiment of the application;
FIG. 4 is a schematic flowchart of implementation of an operation of determining a blockage degree in a blockage detection method for a condenser according to an embodiment of the application;
FIG. 5 is a schematic flowchart of another implementation of a blockage detection method for a condenser according to an embodiment of the application;
FIG. 6 is a schematic flowchart of yet another implementation of a blockage detection method for a condenser according to an embodiment of the application;
FIG. 7 is a schematic structural diagram of composition of a laundry dryer according to an embodiment of the application;
FIG. 8 is a schematic flowchart of yet another implementation of a blockage detection method for a condenser according to an embodiment of the application;
FIG. 9 is a schematic curve graph showing correspondences between temperature of a gas in a tub body and an operation duration in a drying process of a laundry dryer according to an embodiment of the application; and
FIG. 10 is a schematic structural diagram of composition of a laundry treatment device according to an embodiment of the application.

### DETAILED DESCRIPTION

In order to make the purpose, technical solutions and advantages of the application clearer, the application will be described in further detail below with reference to the drawings. The described embodiments should not be considered as limitation to the application. All other embodiments obtained by those of ordinary skill in the art without paying any creative work fall within the scope of protection of the application.

In the following descriptions, reference is made to "some embodiments", which describe a subset of all possible embodiments; however, it may be understood that "some embodiments" may be the same subset or different subsets of all possible embodiments, and may be combined with each other without conflict.

In the following descriptions, reference is made to terms "first\second\third", which are only intended to distinguish similar objects, and do not represent a specific order for the objects. It may be understood that specific orders or sequences of "first\second\third" may be interchanged if allowable, to enable the embodiments of the application described here to be implemented in orders other than those illustrated or described here.

Unless defined otherwise, all technical and scientific terms used here have the same meaning as usually understood by technicians in the technical field to which the application belongs. The terms used here are only for the purpose of describing the embodiments of the application, and are not intended to limit the application.

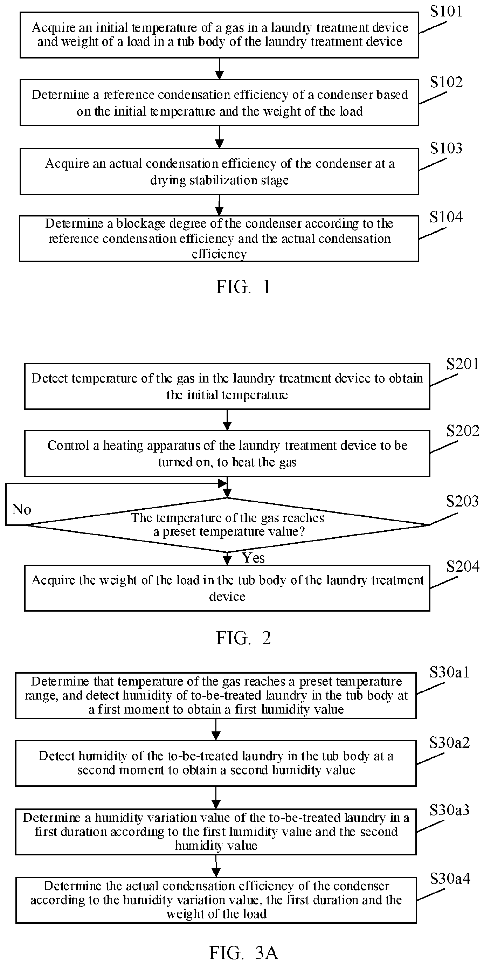

A blockage detection method and apparatus for a condenser, a laundry treatment device, and a computer-readable storage medium provided according to some embodiments of the application will be described below with reference to FIGS. 1 to 10.

An embodiment of the application provides a blockage detection method for a condenser. FIG. 1 is a schematic flowchart of implementation of the blockage detection method for a condenser provided in the embodiment of the application. As shown in FIG. 1, the method includes operations S101 to S104 shown in FIG. 1, and the operations will be described below with reference to FIG. 1.

At S101, an initial temperature of a gas in a laundry treatment device and weight of a load in a tub body of the laundry treatment device are acquired.

The blockage detection method for a condenser according to the embodiment of the application is applied to a laundry treatment device. The laundry treatment device may be a device with a condensation function, such as a washer-dryer, a laundry dryer, etc. In the embodiment of the application, the laundry treatment device is described by taking the laundry dryer as an example. Unless otherwise specified below, the laundry treatment device always refers to the laundry dryer.

During operation of the laundry dryer, a gas in a drying channel enters the tub body from an air inlet of the tub body and exchanges heat with wet laundry in the tub body, which may not only take away moisture in the wet laundry, but also take away blockages which may cause blockage of a condenser, such as lint in the tub body, etc. In order to prevent blockages such as lint from blocking the condenser, a filter is generally arranged at an air outlet. A gas discharged from the air outlet of the tub body and carrying blockages passes through the filter. Most of the blockages in the gas are filtered out, and a small part of the blockages passes through meshes or assembly gaps of the filter, or since the filter is not mounted in place or when the filter is disassembled, blockages enter and accumulate in the condenser, resulting in reduction of condensation efficiency of the condenser and prolonging drying duration of the laundry dryer.

Without adding detection apparatuses, a blockage degree of the condenser cannot be automatically detected in the related art, and the user may only disassemble the laundry dryer regularly and clean blockages accumulated in the condenser. In view of this problem, the embodiment of the application provides a solution for detecting the blockage degree of the condenser. First, after it is determined that the laundry dryer enters a drying process, the initial temperature of the gas in the laundry dryer and the weight of the load in the tub body of the laundry dryer are acquired. When the laundry dryer has just entered the drying process, a heating apparatus has not been turned on, and the initial temperature of the gas in the laundry dryer is equal to ambient temperature outside the tub body. Different ambient temperatures have different impacts on condensation capability of the condenser. Here, the load not only includes laundry, but also includes moisture in the laundry.

At S102, a reference condensation efficiency of a condenser is determined based on the initial temperature and the weight of the load.

In case that no blockage exists in the condenser, after the temperature and the weight of the load are determined, condensation efficiency of the condenser is fixed, and this condensation efficiency is referred to as the reference condensation efficiency. Since a main stage of drying laundry by the laundry dryer is after the drying process enters a drying stabilization stage, the temperature of the gas of the laundry dryer is low before the temperature of the gas is within a preset temperature range, limited moisture in to-be-dried laundry is taken away, and an amount of water condensed by the condenser is negligible. At this time, even though there are blockages, the blockages have little impact on the condensation efficiency. On the above basis, in the embodiment of the application, the condensation efficiency of the condenser will be determined according to the initial temperature and the weight of the load, and is considered as the reference condensation efficiency of the condenser without blockages.

In the embodiment of the application, a correspondence table among each temperature value in a general ambient temperature range, weight of each load in a load range, and the reference condensation efficiency of the condenser may be determined in advance according to experiments, and the correspondence table is stored in a memory of the laundry dryer. After the initial temperature and the weight of the load are acquired, the correspondence table is queried according to the initial temperature and the weight of the load, to acquire the reference condensation efficiency of the condenser.

At S103, an actual condensation efficiency of the condenser at a drying stabilization stage is acquired.

In the embodiment of the application, the drying process may be divided into a preheating stage, a drying stabilization stage and a temperature decreasing stage according to the temperature of the gas in the laundry dryer in the drying process. The preheating stage is a stage where temperature in the tub body is lower than a lower limit of the preset temperature range. The drying stabilization stage is a stage where the temperature in the tub body is maintained between the lower limit and an upper limit of the preset temperature range. The temperature decreasing stage is a stage where the temperature in the tub body decreases from the lower limit of the preset temperature range to a safe temperature at which the user may not be injured. The preheating stage may be further divided into a cold air stage and a temperature increasing stage. In the cold air stage, the heating apparatus is not turned on, and after the cold air stage ends, the heating apparatus continuously operates at a constant power in the temperature increasing stage and the drying stabilization stage. In the temperature increasing stage, due to a short turn-on duration of the entire laundry drying system and impact of the ambient temperature, a precipitation rate of condensed water is unstable. After operating for a time period, the laundry drying system enters the drying stabilization stage, operation of the entire laundry drying system tends to be stable, and the temperature remains unchanged basically. At this time, the precipitation rate of condensed water remains stable until the laundry is dried. After the laundry is dried, it is determined that the drying process enters the temperature decreasing stage, the heating apparatus is turned off to stop heating, and the temperature of the gas in the laundry dryer gradually decreases. It may be seen that in the entire drying process, the laundry dryer may best perform a drying function in the drying stabilization stage, thus the condensation efficiency of the condenser in the drying stabilization stage is used as an actual operation efficiency thereof.

In the embodiment of the application, an implementation of acquiring the actual condensation efficiency of the condenser in the drying stabilization stage may be acquiring humidity of to-be-treated laundry in the tub body in the drying stabilization stage, and determining the actual condensation efficiency of the condenser based on the humidity of the to-be-treated laundry and the weight of the load. In practice, it may be implemented as acquiring the humidity of the to-be-treated laundry at least twice when the drying process is at the drying stabilization stage. For example, the humidity of the to-be-treated laundry is acquired at a first moment and a second moment, to obtain a first humidity value and a second humidity value respectively. When the actual condensation efficiency of the condenser is determined according to the humidity of the to-be-treated laundry and the weight of the load, a humidity variation value may be determined according to the first humidity value and the second humidity value, a first duration may be determined according to the first moment and the second moment, and the actual condensation efficiency of the condenser may be determined according to the humidity variation value, the first duration and the weight of the load.

In the embodiment of the application, another implementation of acquiring the actual condensation efficiency of the condenser in the drying stabilization stage may be acquiring an amount of condensed water of the condenser in a second duration of the drying stabilization stage, and determining the actual condensation efficiency of the condenser based on the amount of condensed water. In practice, it may be implemented as acquiring an amount of dried water of the to-be-treated laundry in the second duration, the amount of dried water is a reduced amount of water, i.e., an amount of water condensed by the condenser. The actual condensation efficiency of the condenser is determined according to the amount of dried water and the second duration. When the amount of dried water of the to-be-treated laundry in the second duration is acquired, the amount of dried water may be determined according to a humidity variation value of the to-be-treated laundry in the second duration and the weight of the load. Finally, the actual condensation efficiency of the condenser is determined according to the amount of dried water and the second duration.

At S104, a blockage degree of the condenser is determined according to the reference condensation efficiency and the actual condensation efficiency.

Since blockages block in the condenser and affect the condensation efficiency of the condenser, the actual condensation efficiency of the condenser is less than or equal to the reference condensation efficiency. After the reference condensation efficiency and the actual condensation efficiency are determined, the blockage degree of the condenser may be determined according to a deviation between the actual condensation efficiency and the reference condensation efficiency. In this way, blockage detection may be achieved without adding other detection apparatuses. The user may determine whether blockages of the condenser need to be cleaned according to the blockage degree, so as to clean blockages timely after it is determined that the condenser is blocked, and ensure that the condenser operates in an unblocked state, thereby shortening drying duration. Furthermore, blockages may be prevented from contaminating the laundry, so that the laundry treatment device is more energy efficient and more hygienic.

A blockage detection method for a condenser according to an embodiment of the application is applied to a laundry treatment device. The method includes the following operations. An initial temperature of a gas in the laundry treatment device and weight of a load in a tub body of the laundry treatment device are acquired. A reference condensation efficiency of the condenser is determined based on the initial temperature and the weight of the load. An actual condensation efficiency of the condenser at a drying stabilization stage is acquired. A blockage degree of the condenser is determined according to the reference condensation efficiency and the actual condensation efficiency. In this way, blockage detection may be achieved without adding other detection apparatuses. The user may determine whether blockages of the condenser need to be cleaned according to the blockage degree, so as to clean blockages timely after it is determined that the condenser is blocked, and ensure that the condenser operates in an unblocked state, thereby shortening drying duration. Furthermore, blockages may be prevented from contaminating the laundry, so that the laundry treatment device is more energy efficient and more hygienic.

In some embodiments, the above operation S101 of "acquiring an initial temperature of a gas in the laundry treatment device and weight of a load in a tub body of the laundry treatment device" in the embodiment shown in FIG. 1 may be implemented by operations S201 to S204 as shown in FIG. 2, and the operations will be described below with reference to FIG. 2.

At S201, temperature of the gas in the laundry treatment device is detected to obtain the initial temperature.

In the embodiment of the application, after entering the drying process, the temperature of the gas in the laundry dryer may be detected immediately to obtain the initial temperature. Although the initial temperature may be immediately obtained in this way, there may be a certain deviation between the initial temperature and an actual ambient temperature. In order to obtain a more accurate ambient temperature, in the embodiment of the application, after entering the drying process, the heating apparatus is not turned on temporarily, the tub body is controlled to rotate first, and a fan is turned on to allow gas outside the tub body to circulate with gas inside the tub body. That is, when the drying process is at the cold air stage, the temperature of the gas in the tub body is detected to obtain the initial temperature. The initial temperature obtained at this time may be considered as the ambient temperature outside the tub body, and the initial temperature is closer to actual temperature of the to-be-treated laundry.

In a practical application, an implementation of obtaining the initial temperature may be determining to enter a drying process, controlling a motor of the laundry treatment device to be turned on to drive the tub body to rotate, and controlling the heating apparatus to be not turned on; and determining that a duration of rotation of the tub body reaches a third duration, and detecting the temperature of the gas in the laundry treatment device to obtain a first temperature; and determining the first temperature as the initial temperature. In this implementation, after the tub body has rotated for the third duration, the temperature of the gas in the laundry dryer only needs to be detected once to obtain the initial temperature. Its advantage is that a number of detections is fewer, however, performing detection once may not be accurate enough and cannot ensure accuracy of the initial temperature.

Another implementation of obtaining the initial temperature may be determining to enter a drying process, controlling a motor of the laundry treatment device to be turned on to drive the tub body to rotate, and controlling the heating apparatus to be not turned on; detecting the temperature of the gas in the laundry treatment device many times in a third duration, to obtain multiple temperature values; and determining an average value of multiple temperature values as the initial temperature. In this implementation, after the tub body rotates, the temperature of the gas in the tub body is detected many times in the third duration to obtain multiple temperature values, and the initial temperature is determined according to multiple temperature values. For example, the average value of multiple temperature values is used as the initial temperature. Although this implementation requires multiple detections, this implementation may ensure accuracy of the initial temperature, thereby ensuring accuracy of the reference condensation efficiency.

In the embodiment of the application, the third duration may be set as any value between 30s (seconds) and 5min (minutes). For example, the third duration is set as 3min. An apparatus for detecting the temperature of the gas may be a temperature detection apparatus arranged in the tub body, and the temperature detection apparatus may be a temperature sensor.

At S202, a heating apparatus of the laundry treatment device is controlled to be turned on, to heat the gas.

After the initial temperature is obtained, the heating apparatus of the laundry dryer is controlled to be turned on, to start heating the gas in the tub body, and the temperature of the gas in the tub body starts to increase gradually.

At S203, it is detected whether the temperature of the gas reaches a preset temperature value.

As the heating apparatus is turned on, the temperature of the gas in the tub body shows an increasing trend, and an increasing rate of the temperature is related to an amount of laundry in the tub body. When there is a large amount of laundry in the tub, the temperature increases slowly, and vice versa. In this way, the weight of the load may be indirectly determined according to the increasing rate of the temperature. When it is detected that the temperature of the gas reaches the preset temperature value, the process enters S204. When it is detected that the temperature of the gas does not reach the preset temperature value, the process continues to perform S203.

In the embodiment of the application, in the drying stabilization stage, the temperature in the tub body is maintained in a preset temperature range. The preset temperature range may be set as any range between 50°C (Celsius) and 80°C. For example, the preset temperature range is set as 55°C to 60°C. Generally, fabrics of different materials may withstand different drying temperatures. The preset temperature range may be correspondingly provided with multiple ranges according to different materials of laundry. When the user selects the drying function, the user selects material of the to-be-dried laundry and sets a corresponding preset temperature range.

The above preset temperature value may be set as a value equal to a lower limit of the preset temperature range (that is, a preset temperature threshold is 55°C). In some alternative embodiments, the preset temperature value may also be set as a value lower than the preset temperature threshold, for example, set as 50°C, so that the weight of the load may be acquired in a certain temperature increasing interval.

At S204, the weight of the load in the tub body of the laundry treatment device is acquired.

The weight of the load is determined according to the initial temperature, the preset temperature value and heating duration, which may be implemented as detecting that the temperature of the gas reaches the preset temperature value, and acquiring the heating duration of the heating apparatus; and determining the weight of the load in the tub body according to the heating duration, the initial temperature and the preset temperature value.

In the embodiment of the application, a correspondence table among each temperature value in a general ambient temperature range, weight of each load in a load range, the preset temperature value and the heating duration may be determined in advance according to experiments. For example, it is measured by experiments that when a 5kg (kilogram) load is carried in the tub body, it takes 20 minutes to heat the gas in the tub body from an ambient temperature of 25°C to 60°C; when a 6kg load is carried in the tub body, it takes 25 minutes to heat the gas in the tub body from the ambient temperature of 25°C to 60°C, etc. These experimental measurement values are stored in the memory of the laundry dryer in form of a correspondence table. After the initial temperature, the preset temperature value and the heating duration are acquired, the correspondence table is queried according to the initial temperature, the preset temperature value and the heating duration, to acquire the weight of the load in the tub body.

In an implementation, the above operation S103 of "acquiring an actual condensation efficiency of the condenser at a drying stabilization stage" in the embodiment shown in FIG. 1 may be implemented by operations S30a1 to S30a4 as shown in FIG. 3A, and the operations will be described below with reference to FIG. 3A.

At S30a1, it is determining that temperature of the gas being within a preset temperature range, and humidity of to-be-treated laundry in the tub body is detected at a first moment to obtain a first humidity value.

Here, the humidity value of the to-be-treated laundry in the tub body is detected at the first moment. A moment when the temperature of the gas has just reached a lower limit of the preset temperature range (i.e., a preset temperature threshold), i.e., a moment when the drying process has just entered the drying stabilization stage, may be used as the first moment; or, any other moment in the drying stabilization stage may be used as the first moment. In the embodiment of the application, the laundry dryer may use a humidity detection apparatus (such as a humidity sensor) to detect the humidity value of the to-be-treated laundry.

At S30a2, humidity of the to-be-treated laundry in the tub body is detected at a second moment to obtain a second humidity value.

Here, the humidity value of the to-be-treated laundry in the tub body is detected at the second moment, which may be achieved at any moment in the drying stabilization stage after the first moment. In some embodiments, the second moment at which the humidity value is acquired again may be determined according to the first moment and a preset time interval. The preset time interval may be the above first duration. For example, the preset time interval may be set as any value between 15min and 35min, for example, set as 25min.

Since moisture in the to-be-treated laundry is evaporated and condensed in the drying process, the humidity of the to-be-treated laundry becomes lower and lower, and the acquired second humidity value is less than the first humidity value.

At S30a3, a humidity variation value of the to-be-treated laundry in a first duration is determined according to the first humidity value and the second humidity value.

Here, the first duration is a duration from the first moment to the second moment, i.e., a time interval between the first moment and the second moment. A difference between the first humidity value H1 acquired at the first moment and the second humidity value H2 acquired at the second moment is determined as the humidity variation value of the to-be-treated laundry in the time period.

At S30a4, the actual condensation efficiency of the condenser is determined according to the humidity variation value, the first duration and the weight of the load.

In the embodiment of the application, a correspondence table among the preset temperature range, weight of each load in a load range, duration, the humidity variation value and the actual condensation efficiency of the condenser may be determined in advance according to experiments, and the correspondence table is stored in the memory of the laundry dryer. After the weight of the load, the first duration and the humidity variation value are acquired according to the above operation S204, the correspondence table is queried to obtain the actual condensation efficiency of the condenser.

In the embodiment of the application, the actual condensation efficiency of the condenser is determined according to the humidity variation value obtained by detecting the humidity of the to-be-treated laundry many times in the first duration in the drying process, to prepare for subsequent determination of the blockage degree of the condenser according to the actual condensation efficiency and the reference condensation efficiency.

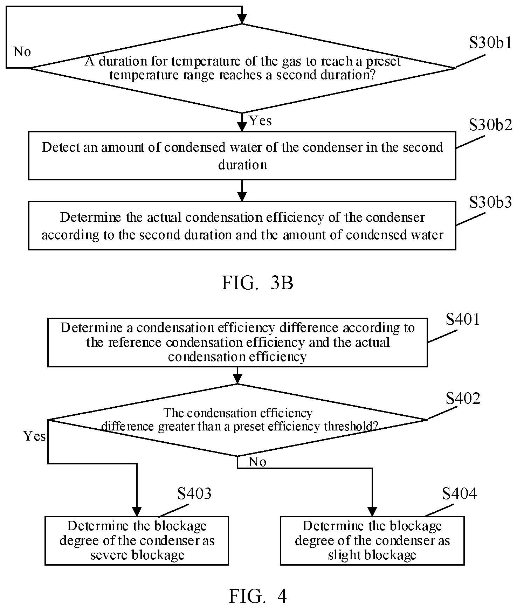

In another implementation, the above operation S103 of "acquiring an actual condensation efficiency of the condenser at a drying stabilization stage" in the embodiment shown in FIG. 1 may be implemented by operations S30b1 to S30b3 as shown in FIG. 3B, and the operations will be described below with reference to FIG. 3B.

At S30b1, it is determined whether a duration in which a temperature of the gas has been within a preset temperature range reaches a second duration.

When a duration for the drying process to be at the drying stabilization stage reaches the second duration, that is, the duration for the temperature of the gas in the tub body to reach the preset temperature range reaches the second duration, the process enters S30b2. When the duration for the drying process to be at the drying stabilization stage does not reach the second duration, that is, the duration in which the temperature of the gas has been within the preset temperature range does not reach the second duration, the process continues to perform the drying process, and returns to S30b1 to acquire the duration in which a temperature of the gas has been within the preset temperature range again.

In the embodiment of the application, the second duration may be set as any value between 15min and 35min, for example, set as 25min.

At S30b2, an amount of condensed water of the condenser in the second duration is detected.

When the drying process is at the drying stabilization stage, the temperature of the gas is maintained in the preset temperature range. Dry and hot gas with temperature in the preset temperature range exchanges heat with the to-be-dried laundry, to take moisture in the laundry out of the tub body to form wet and cold gas. Moisture in the wet and cold gas is condensed out by passing through the condenser and re-enters the tub body, and circulation is made in this way. In a process of drying the to-be-dried laundry, condensed water is condensed out by the condenser. When the duration for the drying process to be at the drying stabilization stage reaches the second duration, that is, the duration in which the temperature of the gas has been within the preset temperature range reaches the second duration, an amount of water condensed out by the condenser in the second duration is detected by a water level sensor in the laundry dryer, to obtain the amount of condensed water.

At S30b3, the actual condensation efficiency of the condenser is determined according to the second duration and the amount of condensed water.

In the embodiment of the application, a correspondence table among the preset temperature range, weight of each load in a load range, duration, the amount of condensed water, and the actual condensation efficiency of the condenser may be determined in advance according to experiments, and the correspondence table is stored in the memory of the laundry dryer. After the weight of the load, the second duration and the amount of condensed water are acquired according to the above operation S204, the correspondence table is queried to obtain the actual condensation efficiency of the condenser.

In the embodiment of the application, the actual condensation efficiency of the condenser may be determined according to the amount of condensed water in the second duration in the drying process, the weight of the load or other parameters, to prepare for subsequent determination of the blockage degree of the condenser according to the actual condensation efficiency and the reference condensation efficiency.

In some embodiments, the above operation S104 of "determining a blockage degree of the condenser according to the reference condensation efficiency and the actual condensation efficiency" in the embodiment shown in FIG. 1 may be implemented by operations S401 to S404 as shown in FIG. 4, and the operations will be described below with reference to FIG. 4.

At S401, a condensation efficiency difference is determined according to the reference condensation efficiency and the actual condensation efficiency.

Here, the reference condensation efficiency is recorded as E1, the actual condensation efficiency is recorded as E2, and the condensation efficiency difference is recorded as ΔE. The condensation efficiency difference is calculated according to ΔE = E1 - E2.

At S402, it is determined whether the condensation efficiency difference is greater than a preset efficiency threshold.

When the condensation efficiency difference is greater than the preset efficiency threshold, it indicates that a difference between the actual condensation efficiency and the reference condensation efficiency is large, and it is considered that there are several blockages, which have great impact on the condensation efficiency of the condenser, and the process enters S403 at this time. When the condensation efficiency difference is less than or equal to the preset efficiency threshold, it indicates that the difference between the actual condensation efficiency and the reference condensation efficiency is small, and it is considered that there are few blockages, which have little impact on the condensation efficiency of the condenser, and the process enters S404 at this time.

At S403, the blockage degree of the condenser is determined as severe blockage.

At S404, the blockage degree of the condenser is determined as slight blockage.

In the embodiment of the application, the difference between the reference condensation efficiency and the actual condensation efficiency is compared to the preset efficiency threshold. When the difference between the reference condensation efficiency and the actual condensation efficiency is greater than the preset efficiency threshold, the blockage degree of the condenser is determined as severe blockage, and it requires cleaning the condenser. When the difference between the reference condensation efficiency and the actual condensation efficiency is less than or equal to the preset efficiency threshold, the blockage degree of the condenser is determined as slight blockage, and it does not require cleaning the condenser.

In some other embodiments, the blockage degree of the condenser may also be determined according to a ratio of a difference between the actual condensation efficiency and the reference efficiency. At this time, determining the blockage degree of the condenser may be implemented as determining a condensation efficiency ratio according to the actual condensation efficiency and the reference condensation efficiency; determining the blockage degree of the condenser as severe blockage, in case that the condensation efficiency ratio is less than a preset ratio threshold; and determining the blockage degree of the condenser as slight blockage, in case that the condensation efficiency ratio is equal to or greater than the preset ratio threshold. For example, the preset ratio threshold is 0.7. When the condensation efficiency ratio is 0.8, it indicates that the actual condensation efficiency reaches 80% of the reference condensation efficiency. At this time, it is considered that there are few blockages, the blockage degree of the condenser is slight blockage, and it does not require cleaning the condenser. When the condensation efficiency ratio is 0.5, it indicates that the actual condensation efficiency is only 50% of the reference condensation efficiency. At this time, it is considered that there are several blockages, the blockage degree of the condenser is severe blockage, and it requires cleaning the condenser.

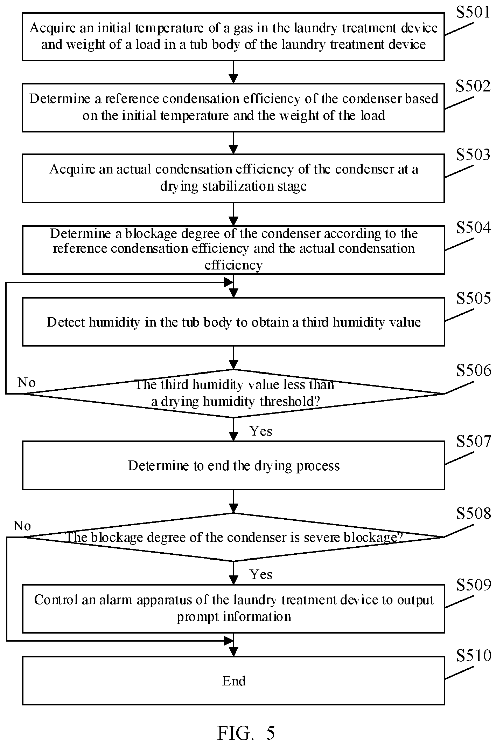

Based on the above embodiment shown in FIG. 1, an embodiment of the application further provides a blockage detection method for a condenser, the method is applied to a laundry treatment device. FIG. 5 is a schematic flowchart of another implementation of the blockage detection method for a condenser provided in the embodiment of the application. As shown in FIG. 5, the blockage detection method for a condenser includes the following operations S501 to S510.

At S501, an initial temperature of a gas in the laundry treatment device and weight of a load in a tub body of the laundry treatment device are acquired.

In the embodiment of the application, operations S501 to S504 correspond to operations S101 to S104 in the embodiment shown in FIG. 1 in a one-to-one relationship. Implementations and achieved effects of operations S501 to S504 may refer to the above detailed descriptions in the embodiment shown in FIG. 1.

At S502, a reference condensation efficiency of the condenser is determined based on the initial temperature and the weight of the load.

At S503, an actual condensation efficiency of the condenser at a drying stabilization stage is acquired.

At S504, a blockage degree of the condenser is determined according to the reference condensation efficiency and the actual condensation efficiency.

At S505, humidity in the tub body is detected to obtain a third humidity value.

After the blockage degree of the condenser is determined, the laundry dryer continues to perform the drying process. In the drying process, the humidity in the tub body is detected by a humidity detection apparatus in the laundry dryer, that is, humidity of laundry in the tub body is detected, to obtain the third humidity value. The humidity detection apparatus may be a humidity sensor.

At S506, it is determined whether the third humidity value is less than a drying humidity threshold.

When the third humidity value is less than the drying humidity threshold, it indicates that the laundry in the tub body has been dried, the process enters S507 at this time. When the third humidity value is equal to or greater than the drying humidity threshold, it indicates that the humidity of the laundry in the tub body is still high, and the laundry has not been dried. The process continues to perform the drying process and returns to S505 to acquire the third humidity value again.

At S507, it is determined that the drying process ends.

At S508, it is determined whether the blockage degree of the condenser is severe blockage.

When it is determined according to S504 that the blockage degree of the condenser is severe blockage, prompt information needs to be outputted to prompt the user to clean blockages in the condenser timely, the process enters S509 at this time. When it is determined according to S504 that the blockage degree of the condenser is slight blockage, no cleaning is required, and the process enters S510 to end the program.

At S509, an alarm apparatus of the laundry treatment device is controlled to output prompt information.

Here, the prompt information is configured to prompt the user to clean the condenser, so that the user removes blockages in the condenser timely.

At S510, the process ends.

In the embodiment of the application, after the drying process ends, when the blockage degree of the condenser is slight blockage, the laundry dryer enters a standby state, and does not need to output prompt information. When the blockage degree of the condenser is severe blockage, the laundry dryer enters the standby state, and the alarm apparatus of the laundry dryer outputs prompt information. The prompt information may be achieved by displaying an indication code, turning on a condenser blockage indicator light, or making an alarm sound by the alarm apparatus. Alternatively, when the laundry dryer is capable of transmitting information to a user terminal, the prompt information may also be prompt information sent by the laundry dryer to the user terminal.

In some other embodiments, after the drying process ends, when the blockage degree of the condenser is slight blockage, the laundry dryer enters a standby state, and the alarm apparatus of the laundry dryer may also output prompt information to prompt the user that the blockage degree is slight blockage, so that the user may know the blockage degree of the condenser after each use of the laundry dryer.

According to the blockage detection method for a condenser provided in the embodiment of the application, after the blockage degree of the condenser is detected, when it is determined that the blockage degree of the condenser is severe blockage, prompt information is outputted after the drying program ends, so that the user knows occurrence of blockage of the condenser timely, and thus may clean blockages in the condenser timely, ensuring that the condenser operates in an unblocked state, shortening drying duration and improving drying effect.

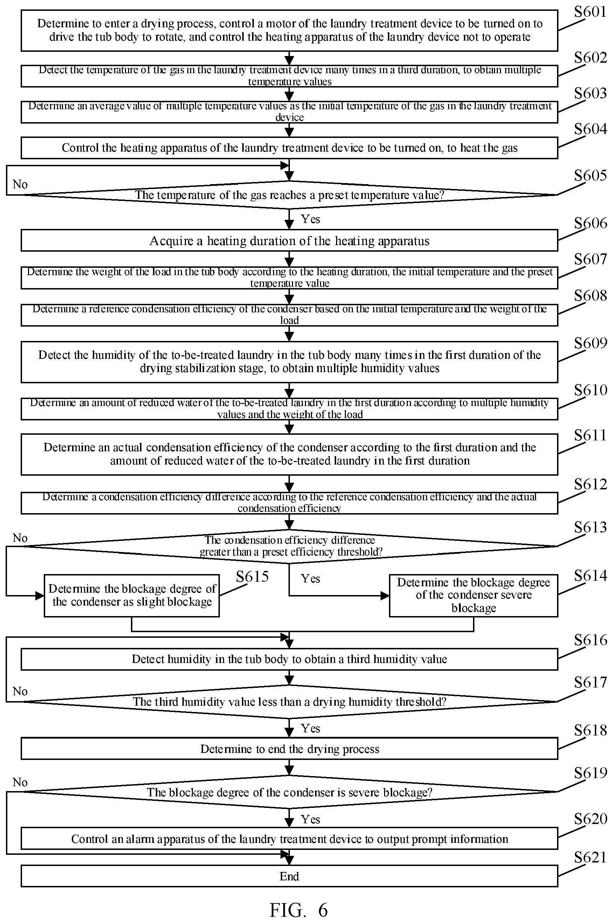

Based on the above embodiments, an embodiment of the application further provides a blockage detection method for a condenser, the method is applied to a laundry treatment device. FIG. 6 is a schematic flowchart of yet another implementation of the blockage detection method for a condenser provided in the embodiment of the application. As shown in FIG. 6, the blockage detection method for a condenser includes the following operations S601 to S621.

At S601, it is determined to enter a drying process, a motor of the laundry treatment device is controlled to be turned on to drive the tub body to rotate, and the heating apparatus of the laundry device is controlled not to operate.

Here, a fan of the laundry treatment device may also be turned on to facilitate accelerating circulation of air in the tub body. At this time, the heating apparatus of the laundry treatment device is not turned on temporarily, and will be turned on after an initial temperature is acquired.

At S602, the temperature of the gas in the laundry treatment device is detected many times in a third duration, to obtain multiple temperature values.

In the third duration, the drying process is at the cold air stage.

At S603, an average value of multiple temperature values is determined as the initial temperature of the gas in the laundry treatment device.

In the embodiment of the application, after the tub body rotates, the temperature of the gas in the tub body is detected many times in the third duration to obtain multiple temperature values, and the initial temperature is determined according to multiple temperature values. For example, the average value of multiple temperature values is used as the initial temperature. Although this implementation requires multiple detections, this implementation may ensure accuracy of the initial temperature, thereby ensuring accuracy of the reference condensation efficiency.

In some other embodiments, the above operations S602 and S603 may be replaced by operations S602' and S603'.

At S602', it is determined whether a duration of rotation of the tub body reaches a third duration.

When the duration of rotation of the tub body reaches the third duration, it indicates that the temperature of the gas in the tub body has been consistent with the ambient temperature outside the tub body. At this time, the process enters S603'. When the duration of rotation of the tub body does not reach the third duration, the process continues to perform S602'.

At S603', the temperature of the gas in the laundry treatment device is detected to obtain a first temperature, and the first temperature is determined as the initial temperature of the gas.

In the embodiment, after the tub body has rotated for the third duration, the temperature of the gas in the laundry treatment device only needs to be detected once to obtain the initial temperature. Its advantage is that a number of detections is fewer, however, performing detection once may not be accurate enough and cannot ensure accuracy of the initial temperature.

At S604, the heating apparatus of the laundry treatment device is controlled to be turned on, to heat the gas.

After the initial temperature is obtained, the heating apparatus is controlled to be turned on, to start heating the gas in the tub body, and the temperature of the gas in the tub body starts to increase gradually. At this time, the drying process is at the temperature increasing stage.

At S605. it is determined whether the temnerature of the gas reaches a reset temnerature value.

When it is detected that the temperature of the gas reaches the preset temperature value, the process enters S606. When it is detected that the temperature of the gas does not reach the preset temperature value, the process continues to perform S605.

At S606, a heating duration of the heating apparatus is acquired.

At S607, the weight of the load in the tub body is determined according to the heating duration, the initial temperature and the preset temperature value.

In the embodiment of the application, a correspondence table among each temperature value in a general ambient temperature range, weight of each load in a load range, the preset temperature value and the heating duration may be determined in advance according to experiments. These experimental measurement values are stored in the memory of the laundry treatment device in form of a correspondence table. After the initial temperature, the preset temperature value and the heating duration are acquired, the correspondence table is queried according to the initial temperature, the preset temperature value and the heating duration, to acquire the weight of the load in the tub body.

At S608, a reference condensation efficiency of the condenser is determined based on the initial temperature and the weight of the load.

Correspondences among each temperature value in a general ambient temperature range, weight of each load in a load range, and the reference condensation efficiency of the condenser which are determined in advance according to experiments, may also be stored in the above correspondence table. After the initial temperature and the weight of the load are acquired, the correspondence table is queried to acquire the reference condensation efficiency of the condenser.

At S609, the humidity of the to-be-treated laundry in the tub body is detected many times in the first duration of the drying stabilization stage, to obtain multiple humidity values.

Here, performing detection many times in the first duration, may be started from a time when the temperature of the gas reaches the preset temperature range; or, may be started at a beginning moment of any other time period having a duration equal to the first duration in the drying stabilization stage. Exemplarily, the humidity of the to-be-treated laundry is detected at a first moment to obtain a first humidity value, the humidity of the to-be-treated laundry is detected at a second moment to obtain a second humidity value, a duration between the first moment and the second moment is the first duration. In the embodiment of the application, the laundry dryer may detect a humidity value of the to-be-dried laundry by using a humidity sensor.

At S610, an amount of reduced water of the to-be-treated laundry in the first duration is determined according to multiple humidity values and the weight of the load.

The amount of reduced water of the to-be-treated laundry in the first duration may be obtained according to variation of humidity values of the laundry detected in the first duration. For example, a humidity variation value is determined according to the first humidity value and the second humidity value, and the amount of reduced water of the to-be-treated laundry in the first duration is determined according to the humidity variation value and the weight of the load. In another implementation, the amount of reduced water of the to-be-treated laundry in the first duration may also be obtained by a water level sensor detecting an amount of water condensed by the condenser.

At S611, an actual condensation efficiency of the condenser is determined according to the first duration and the amount of reduced water of the to-be-treated laundry in the first duration.

Correspondences among the preset temperature range, weight of each load in a load range, duration, the amount of reduced water of the laundry and the actual condensation efficiency of the condenser which are determined in advance according to experiments, may also be stored in the above correspondence table. After the first duration and the amount of reduced water of the to-be-treated laundry in the first duration are acquired, the correspondence table is queried to acquire the actual condensation efficiency of the condenser.

In some other embodiments, the above operations S610 and S611 may be replaced by operations S610a and S611a respectively.

At S610a, a humidity variation value of the to-be-treated laundry in the first duration is determined according to multiple humidity values.

A difference between the first humidity value H1 acquired at the first moment and the second humidity value H2 acquired at the second moment is determined as the humidity variation value of the to-be-treated laundry in the time period. Here, the first duration is a duration from the first moment to the second moment, i.e., a time interval between the first moment and the second moment.

At S611a, an actual condensation efficiency of the condenser is determined according to the humidity variation value, the first duration and the weight of the load.

At this time, in the above correspondence table, a correspondence table among the preset temperature range, weight of each load in a load range, duration, the humidity variation value and the actual condensation efficiency of the condenser may be determined in advance according to experiments, and the correspondence table is stored in the memory of the laundry dryer. After the weight of the load, the first duration and the humidity variation value are acquired, the correspondence table is queried to obtain the actual condensation efficiency of the condenser.

In some other embodiments, the above operations S609 to S611 may be replaced by operations S609b to S612b.

At S609b, it is determined whether the temperature of the gas being within a preset temperature range.

When it is detected that the temperature of the gas reaches a preset temperature threshold, it is determined that the temperature of the gas reaches the preset temperature range, the process enters S610b at this time. When the temperature of the gas does not reach the preset temperature threshold, it is determined that the temperature of the gas does not reach the preset temperature range, the process continues to perform S609b. Here, the preset temperature threshold is a lower limit of the preset temperature range, and the above preset temperature value is less than or equal to the preset temperature threshold.

At S610b, it is determined whether a duration in which the temperature of the gas has been within the preset temperature range reaches a first duration.

When a duration for the drying process to be at the drying stabilization stage reaches the first duration, that is, the duration for the temperature of the gas in the tub body to reach the preset temperature range reaches the first duration, the process enters S611b. When the duration for the drying process to be at the drying stabilization stage does not reach the first duration, that is, the duration in which the temperature of the gas has been within the preset temperature range does not reach the first duration, the process continues to perform the drying process, and returns to S609b to acquire the duration in which temperature of the gas has been within the preset temperature range again

At S611b, an amount of condensed water of the condenser in the first duration is acquired.

Here, after it is determined that the duration for the drying process to be at the drying stabilization stage reaches the first duration, an amount of water condensed by the condenser in the first duration may be detected by a water level sensor in the laundry dryer, to obtain the amount of condensed water.

At S612b, an actual condensation efficiency of the condenser is determined according to the first duration and the amount of condensed water.

Correspondences among the preset temperature range, weight of each load in a load range, duration, the amount of condensed water and the actual condensation efficiency of the condenser which may be determined in advance according to experiments, may also be stored in the above correspondence table. After the first duration and the amount of condensed water are acquired, the correspondence table is queried to acquire the actual condensation efficiency of the condenser.

At S612, a condensation efficiency difference is determined according to the reference condensation efficiency and the actual condensation efficiency.

Here, the reference condensation efficiency is recorded as E1, the actual condensation efficiency is recorded as E2, and the condensation efficiency difference is recorded as ΔE. The condensation efficiency difference is calculated according to ΔE = E1 - E2.

At S613, it is determined whether the condensation efficiency difference is greater than a preset efficiency threshold.

When the condensation efficiency difference is greater than the preset efficiency threshold, it indicates that a difference between the actual condensation efficiency and the reference condensation efficiency is large, and it is considered that there are several blockages, which have great impact on the condensation efficiency of the condenser, and the process enters S614 at this time. When the condensation efficiency difference is less than or equal to the preset efficiency threshold, it indicates that the difference between the actual condensation efficiency and the reference condensation efficiency is small, and it is considered that there are few blockages, which have little impact on the condensation efficiency of the condenser, and the process enters S615 at this time.

At S614, the blockage degree of the condenser is determined as severe blockage.

After the blockage degree of the condenser is determined, the process enters S616 to continue to perform the drying process.

At S615, the blockage degree of the condenser is determined as slight blockage.

At S616, humidity in the tub body is detected to obtain a third humidity value.

After the blockage degree of the condenser is determined, the laundry treatment device continues to perform the drying process. In the drying process, the humidity in the tub body is detected by a humidity detection apparatus in the laundry treatment device, that is, humidity of laundry in the tub body is detected, to obtain the third humidity value.

At S617, it is determined whether the third humidity value is less than a drying humidity threshold.

When the third humidity value is less than the drying humidity threshold, it indicates that the laundry in the tub body has been dried, the process enters S618 at this time. When the third humidity value is equal to or greater than the drying humidity threshold, it indicates that the humidity of the laundry in the tub body is still high, and the laundry has not been dried. The process continues to perform the drying process and returns to S616 to acquire the third humidity value again.

At S618, it is determined that the drying process ends.

At S619, it is determined whether the blockage degree of the condenser is severe blockage.

When it is determined according to S614 that the blockage degree of the condenser is severe blockage, prompt information needs to be outputted to prompt the user to clean blockages in the condenser timely, the process enters S620. When it is determined according to S615 that the blockage degree of the condenser is slight blockage, no cleaning is required, and the process enters S621.

At S620, an alarm apparatus of the laundry treatment device is controlled to output prompt information.

Here, the prompt information is configured to prompt the user to clean the condenser, so that the user removes blockages in the condenser timely.

At S621, the process ends.

According to the blockage detection method for a condenser provided in the embodiment of the application, after the laundry treatment device determines to enter the drying process, the reference condensation efficiency of the condenser is determined according to the ambient temperature and the weight of the load in the tub body of the laundry treatment device. After entering the drying stabilization stage, the actual condensation efficiency of the condenser is determined. The blockage degree of the condenser is determined by comparing the reference condensation efficiency to the actual condensation efficiency. When the blockage degree is severe blockage, prompt information is outputted. In this way, blockage detection may be achieved without adding other detection apparatuses. The user may determine whether blockages of the condenser need to be cleaned according to the blockage degree, so as to clean blockages timely when the condenser is blocked, and ensure that the condenser operates in an unblocked state, thereby shortening drying duration. Furthermore, blockages may be prevented from contaminating the laundry, so that the laundry treatment device is more energy efficient and more hygienic.

An embodiment of the application further provides a blockage detection method for a condenser, the method is applied to a household appliance provided with a steam generator. The household appliance in the embodiment of the application is described by taking a laundry dryer as an example.

With the improvement of people's living standards and the acceleration of working paces, technical development directions of the laundry dryer industry have increasingly tended to be more intelligent, more energy efficient, and more hygienic. The problem of detecting lint blockage of a condenser of the laundry dryer also becomes more and more prominent. In currently existing technical solutions, a filter screen is generally provided at a front end of the condenser to filter lint in circulating air so as to reduce the lint blockage of the condenser, and the user is notified to clean the condenser regularly. The existing technical solutions have two drawbacks. First, the filter screen does not completely filter lint in the circulating air. After long-term use, lint may block surfaces of the condenser. Second, after the condenser is blocked, blockage is not detected, and the user is not prompted, so that the user cannot clean the condenser timely. After the condenser is blocked with lint, condensation efficiency is reduced, and more water vapor in the circulating air re-enters laundry which need to be dried, prolonging drying duration. Furthermore, accumulation of lint breeds bacteria, contaminating the laundry.

According to the solution for detecting blockage of the condenser provided in the embodiment of the application, whether the condenser is blocked is detected in real time, and the user is prompted to clean the condenser timely, shortening drying duration and preventing lint from contaminating the laundry, which is more energy efficient and more hygienic.

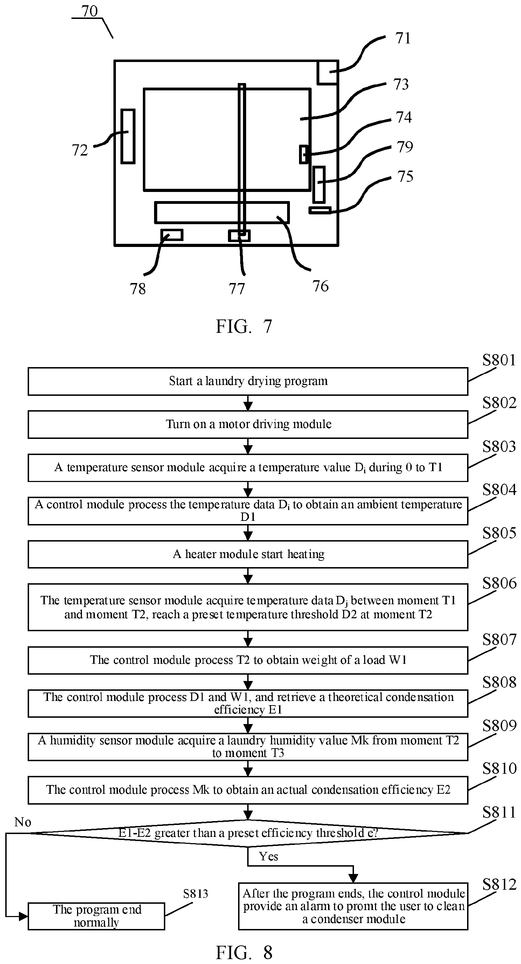

FIG. 7 is a schematic structural diagram of composition of a laundry dryer according to an embodiment of the application. As shown in FIG. 7, the laundry dryer 70 includes a blockage detection apparatus for a condenser 71, a heating apparatus 72, a tub body 73, a humidity detection apparatus 74, a temperature detection apparatus 75, the condenser 76, and a motor 77.

The heating apparatus 72 is arranged in a drying channel, and is configured to heat gas in the laundry dryer 70. The tub body 73 is provided with an air outlet 731 and an air inlet 732, and is configured to accommodate to-be-dried laundry. The humidity detection apparatus 74 is arranged in the tub body 73, and is configured to detect humidity of the to-be-dried laundry. The temperature detection apparatus 75 is arranged in the drying channel, and is configured to detect temperature of the gas in the laundry dryer. The condenser 76 is arranged at a lower end of the tub body 73, and is configured to condense the gas in the laundry dryer. The motor 77 is arranged at the lower end of the tub body 73, and is configured to drive the tub body 73 to rotate. A water level detection apparatus 78 is provided, the blockage detection apparatus for a condenser 71 is configured to control the heating apparatus 72, the tub body 73, the humidity detection apparatus 74, the temperature detection apparatus 75, the condenser 76 and the motor 77 to implement detection of blockage degree of the condenser.

In the embodiment of the application, the humidity detection apparatus 74, the temperature detection apparatus 75 and the water level detection apparatus 78 may be sensors, such as a humidity sensor, a temperature sensor and a water level sensor respectively. The water level sensor may be a sensor which acquires data continuously; or, may be a water level switch provided with an on/off threshold.

In the embodiment of the application, as shown in FIG. 7, the laundry dryer 70 may further include the water level detection apparatus 78 and a filter 79. The water level detection apparatus 78 is arranged at a water outlet (not shown in the figure) of the condenser 76, and is configured to detect an amount of water condensed by the condenser 76. The filter 79 is arranged between the air outlet 731 of the tub body 73 and the condenser 76, and filters the gas discharged from the air outlet 731 and carrying lint and the like which may block the condenser, reducing blockages entering the condenser.

When the laundry dryer operates, the circulating air is heated by a heater module and then exchanges heat with wet laundry inside an inner tub module (i.e., the above tub body 73). After the circulating air exchanges heat with the laundry, the circulating air may carry some lint. A lint filter module (i.e., the above filter 79) may filter out most of the lint in the air, however, part of the lint passes through meshes or assembly gaps of the lint filter module, and continues to enter a condenser module and accumulate thereon. A humidity sensor module detects humidity of the laundry in real time, and a temperature sensor module detects temperature of the circulating air in real time. Some condensed water is condensed out from the circulating air in the condenser module, and a water level sensor module measures an amount of the condensed water.

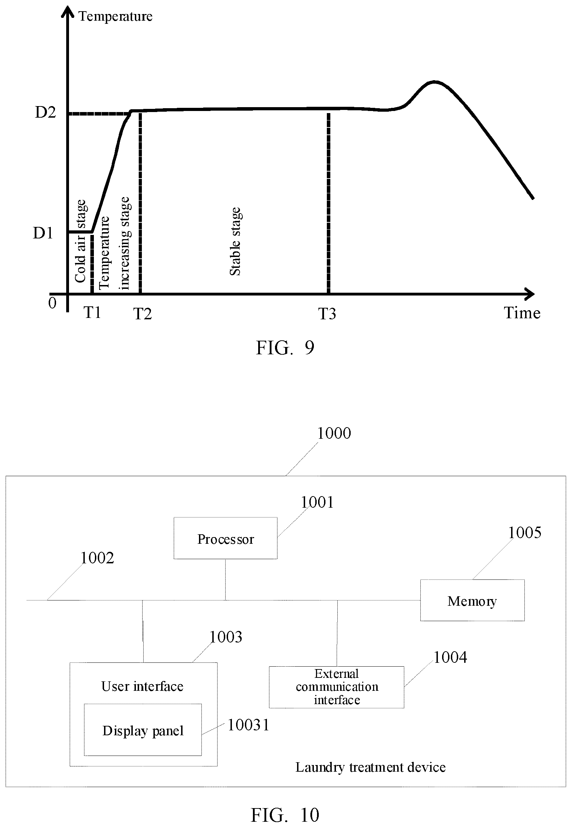

FIG. 8 is a schematic flowchart of yet another implementation of a blockage detection method for a condenser according to an embodiment of the application. FIG. 9 is a schematic curve graph showing correspondences between temperature of a gas in a tub body and an operation duration in a drying process of a laundry dryer according to an embodiment of the application. The blockage detection method for a condenser provided in the embodiment of the application will be described below with reference to FIG. 8 and FIG. 9.

At S801, a laundry drying program starts.

At S802, a motor driving module is turned on.

The motor driving module is the above motor 77. When the laundry drying programs starts, the motor driving module starts operation, and air in the tub body is driven by a fan to accelerate circulation.

At S803, a temperature sensor module acquires a temperature value Dᵢ during 0 to T1.

The temperature sensor module is the above temperature detection apparatus 75. Here, i is a number of acquisitions and is an integer greater than 0. A duration from 0 to moment T1 is the third duration in the above embodiments. In the embodiment of the application, the third duration may take any value between 30s and 5min. For example, the third duration takes a value of 1min.

At S804, a control module processes the temperature data Dᵢ to obtain an ambient temperature D1.

The control module is the above blockage detection apparatus for a condenser 71. Here, an average value of D0 to Dᵢ may be determined as the ambient temperature D1 (i.e., the above initial temperature).

At S805, a heater module starts heating.

The heater module is the above heating apparatus 72. After the ambient temperature D1 is determined, the heater module is controlled to be turned on, that is, the air in the tub body starts to be heated from moment T1.

At S806, the temperature sensor module acquires temperature data Dⱼ between moment T1 and moment T2, and a preset temperature threshold D2 is reached at moment T2.

Here, j is a positive integer, and j = 1, 2, 3,... When the temperature sensor module acquires the temperature Dⱼ = D2, the drying process enters a stable stage (i.e., the above drying stabilization stage), and the process enters S807.

At S807, the control module processes T2 to obtain weight of a load W1.

The control module queries a pre-stored relationship table according to a duration from moment T1 to moment T2, D1 and D2, to obtain the weight of the load W1. Here, the weight of the load W1 not only includes laundry, but also includes to-be-dried moisture in the laundry.

At S808, the control module processes D1 and W1, and retrieves a theoretical condensation efficiency E1.

The control module queries a pre-stored relationship table according to D1 and W1, to obtain the theoretical condensation efficiency (i.e., the above reference condensation efficiency) E1 of the condenser.

At S809, a humidity sensor module acquires a laundry humidity value Mk from moment T2 to moment T3.

The humidity sensor module is the above humidity detection apparatus 74. The humidity sensor module detects the laundry humidity value from moment T2 to moment T3, to obtain Mk.

At S810, the control module processes Mk to obtain an actual condensation efficiency E2.

The control module queries a pre-stored relationship table according to Mk, to obtain the actual condensation efficiency E2 of the condenser.

In some other embodiments, the above operations S809 and S810 may be replaced by operations S809a and S810a respectively.

At S809a, a water level sensor module acquires an amount of condensed water W2.

The water level sensor module is the above water level detection apparatus 78. The water level sensor module detects an amount of water condensed by the condenser at moment T3, to obtain W2.

At S810a, the control module processes to obtain an actual condensation efficiency E2.

The control module queries a pre-stored relationship table according to W2, to obtain the actual condensation efficiency E2 of the condenser.

At S811, it is determined whether E1 - E2 is greater than a preset efficiency threshold e.

A difference between E1 and E2 is the above condensation efficiency difference ΔE. It is determined whether ΔE is greater than e. When ΔE > e, the process enters S812; and when ΔE ≤ e, the process enters S813.

At S812, after the program ends, the control module provides an alarm to prompt the user to clean a condenser module.

The condenser module is the above condenser 76. After the drying program ends, that is, after the laundry is dried, the control module outputs prompt information to prompt the user to clean blockages in the condenser.

Here, an alarm-providing mode by which the control module prompts to clean the condenser may be modes such as flashing of an alarm light, or a voice, etc. The alarm-providing mode for prompting to clean the condenser may be after end of the current drying program or before beginning of a next drying program.

At S813, the program ends normally.

When it is determined that there are few blockages in the condenser, it is unnecessary to output prompt information after the drying program ends.

As shown in FIG. 9, a detection method provided in an embodiment of the application divides a drying process into a cold air stage 0-T1, a temperature increasing stage T1-T2, a temperature stabilization stage T2-T3, and a subsequent stage.

The control module presets a duration, i.e., a third duration (equal to the duration from 0 to moment T1), and the heater module starts heating only after moment T1. The temperature sensor module acquires a temperature value Dᵢ during 0-T1, and the control module processes the temperature value Dᵢ to obtain an ambient temperature D1. The temperature sensor module acquires a temperature value Dⱼ during T1-T2. At T2, temperature D2 starts to be in a relatively stable state. The control module processes T2 to obtain the weight of the load W1. The control module processes the ambient temperature D1 and the weight of the load W1, and a preset reference condensation efficiency E1 is retrieved from the control module. The control module sets a duration, i.e., a first duration (equal to a duration from moment T2 to moment T3), and the temperature D2 between T2 to T3 is in a relative steady state.

In the temperature stabilization stage between moment T2 and moment T3, the humidity sensor module detects the humidity Mk of the laundry in real time, and the control module processes Mk to obtain an actual condensation efficiency E2.

The control module compares E1 to E2, and when E1 - E2 > e, after the program ends, the control module provides an alarm to prompt the user to clean the condenser module. Otherwise, the program ends normally.

The technical problem to be solved by the embodiment of the application is to improve a shortcoming in the related art that the blockage degree of the condenser cannot be detected without adding detection apparatuses, and to provide a blockage detection method for a condenser, in which it is detected whether the condenser module is blocked in real time and it prompts the user to clean the condenser module timely, which may reduce drying time, prevent lint from contaminating the laundry, is more energy efficient and more hygienic.

A basic solution of the embodiment of the application is that the control module collects temperature values Dᵢ and Dⱼ detected by the temperature sensor module of the laundry dryer in different time periods 0-T1 and T1-T2, calculates the ambient temperature D1 and the weight of the load W1, and obtains the theoretical condensation efficiency E1. The humidity sensor module acquires the laundry humidity value Mk for a period of time when temperature is in a stable state, and the control module processes Mk to obtain the actual condensation efficiency E2. When E1 - E2 > e (the preset efficiency threshold), after the program ends, the control module provides an alarm to prompt the user to clean the condenser module. Otherwise, the program ends normally. According to the blockage detection method for a condenser provided in the embodiment of the application, the ambient temperature value and the weight of the load are determined and acquired by turning the heater on and off and by the temperature sensor, to retrieve the reference condensation efficiency E1, and the actual condensation efficiency E2 is acquired by the humidity value. When the condensation efficiency difference is greater than the preset efficiency threshold, an alarm is provided after the program ends, to prompt the user to clean the condenser module.

According to the solution for detecting blockage of the condenser provided in the embodiment of the application, real-time detection on whether the condenser is blocked is achieved without adding additional detection apparatuses, and the user is prompted to clean the condenser timely when it is blocked, which may reduce drying time, prevent lint from contaminating the laundry, is more energy efficient and more hygienic.

An embodiment of the application provides a laundry treatment device. FIG. 10 is a schematic structural diagram of composition of the laundry treatment device provided in the embodiment of the application. According to an exemplary structure of the laundry treatment device 1000 shown in FIG. 10, other exemplary structures of the laundry treatment device 1000 may be expected. Therefore, the structure described here should not be considered as a limitation. For example, part of components described below may be omitted, or components which are not described below may be added to adapt to special requirements of certain applications.

The laundry treatment device 1000 shown in FIG. 10 includes a processor 1001, at least one communication bus 1002, a user interface 1003, at least one external communication interface 1004 and a memory 1005. The communication bus 1002 is configured to implement connection and communication between these components. The user interface 1003 may include a display panel 10031, and the external communication interface 1004 may include a standard wired interface and a wireless interface. The processor 1001 is configured to execute a program of the blockage detection method for a condenser stored in the memory, to implement operations of the blockage detection method for a condenser provided in the above embodiments.

An embodiment of the application provides a computer-readable storage medium. In the embodiment of the application, when the above blockage detection method for a condenser is implemented in form of a software function module and sold or used as an independent product, the above blockage detection method for a condenser may also be stored in a computer-readable storage medium. Based on such understanding, the technical solutions of the embodiments of the application substantially or parts making contributions to the related art may be embodied in form of a software product, and the computer software product is stored in a storage medium, includes several instructions to enable a computer device (which may be a personal computer, a server, or a network device, etc.) to execute all or part of the method described in each embodiment of the application. The foregoing storage medium includes various media capable of storing program codes such as a USB flash disk, a mobile hard disk, a Read Only Memory (ROM), a magnetic disk, or an optical disk, etc. In this way, the embodiments of the application are not limited to any specific combination of hardware and software.

Correspondingly, an embodiment of the application provides a computer-readable storage medium, having stored thereon a computer program. Operations of the blockage detection method for a condenser provided in the above embodiments are implemented when the computer program is executed by a processor.

The above descriptions of the embodiments of the laundry treatment device and the storage medium are similar to the above descriptions of the method embodiments, and have advantageous effects similar to the method embodiments. Technical details which are not disclosed in the embodiments of the laundry treatment device and the storage medium of the application, may be understood with reference to the descriptions of the method embodiments of the application.

It should be understood that reference is made to "one embodiment" or "an embodiment" throughout the description, which means that specific features, structures or characteristics associated with the embodiment are included in at least one embodiment of the application. Therefore, appearances of "in one embodiment" or "in an embodiment" in various places throughout the description do not necessarily refer to the same embodiment. Furthermore, these specific features, structures or characteristics may be combined in one or more embodiments in any suitable manner. It should be understood that in various embodiments of the application, sizes of serial numbers of the above processes does not mean execution sequences thereof, and the execution sequence of each process should be determined by its functions and internal logics, and should not constitute any limitation to implementations of the embodiments of the application. Serial numbers of the above embodiments of the application are only intended for descriptions, and do not represent advantages or disadvantages of the embodiments.

It should be noted that terms "include", "including" or any other variants thereof here are intended to encompass non-exclusive inclusion, so that a process, method, article or apparatus including a series of elements not only includes those elements, but also includes other elements which are not explicitly listed, or includes elements inherent to such process, method, article or apparatus. Without any further limitation, an element defined by a phrase "including a..." does not preclude presence of additional identical elements in a process, method, article or apparatus including the element.

In several embodiments provided in the application, it should be understood that the disclosed devices and methods may be implemented in other ways. The above device embodiments are only illustrative. For example, division of the units is only a logical function division. In an actual implementation, there may be other division manners. For example, multiple units or components may be combined or may be integrated into another system, or some features may be ignored or may not be performed. Furthermore, mutual coupling or direct coupling or communication connection among components as shown or discussed may be indirect coupling or communication connection through some interfaces, devices or units, and may be in electrical, mechanical or other forms.

The units described as separate components may be or may not be physically separated, and the components displayed as units may be or may not be physical units, that is, they may be located in one place, or may be distributed on multiple network units. Part or all of the units may be selected according to actual requirements, to achieve the purpose of the solutions of the embodiments.

Furthermore, each function unit in each embodiment of the application may be integrated into one processing unit, or each unit may be separately used as a unit respectively, or two or more units may be integrated into one unit. The above integrated unit may be implemented in form of hardware or in form of hardware plus software function units.

It may be understood by those of ordinary skill in the art that all or part of operations implementing the above method embodiments may be completed by hardware related to program instructions, the foregoing program may be stored in a computer-readable storage medium, and when the program is executed, operations including the above method embodiments are executed; and the foregoing storage medium includes various media capable of storing program codes, such as a mobile storage device, a ROM, a magnetic disk, or an optical disk, etc.

Or, when the above integrated unit of the application is implemented in form of a software function module and sold or used as an independent product, the above integrated unit may be stored in a computer-readable storage medium. Based on such understanding, the technical solutions of the embodiments of the application substantially or parts making contributions to the related art may be embodied in form of a software product, and the computer software product is stored in a storage medium, includes several instructions to enable a product to execute all or part of the method described in each embodiment of the application. The foregoing storage medium includes various media capable of storing program codes, such as a mobile storage device, a ROM, a magnetic disk, or an optical disk, etc.

The above descriptions are only implementations of the application, however, the scope of protection of the application is not limited thereto. Any variation or replacement easily conceived by those skilled in the art within the technical scope disclosed by the application should be included in the scope of protection of the application. Therefore, the scope of protection of the application should be subjected to the scope of protection of claims.

### INDUSTRIAL APPLICABILITY

The embodiments of the application provide a blockage detection method and apparatus for a condenser, a laundry treatment device, and a computer-readable storage medium. The method includes the following operations. An initial temperature of a gas in the laundry treatment device and weight of a load in a tub body are acquired. A reference condensation efficiency of the condenser is determined based on the initial temperature and the weight of the load. An actual condensation efficiency of the condenser at a drying stabilization stage is acquired. A blockage degree of the condenser is determined according to the reference condensation efficiency and the actual condensation efficiency. In this way, blockage detection may be achieved without adding other detection apparatuses, so that the user may clean blockages timely to ensure that the condenser operates in an unblocked state, thereby shortening drying duration. Furthermore, blockages may be prevented from contaminating the laundry, so that the laundry treatment device is more energy efficient and more hygienic.

## Claims

1. A blockage detection method for a condenser, applied to a laundry treatment device, the method comprising:
acquiring an initial temperature of a gas in the laundry treatment device and weight of a load in a tub body of the laundry treatment device;
determining a reference condensation efficiency of the condenser based on the initial temperature and the weight of the load;
acquiring an actual condensation efficiency of the condenser at a drying stabilization stage; and
determining a blockage degree of the condenser according to the reference condensation efficiency and the actual condensation efficiency.

2. The method of claim 1, wherein acquiring the actual condensation efficiency of the condenser at the drying stabilization stage comprises:
determining that temperature of the gas being within a preset temperature range, and detecting humidity of to-be-treated laundry in the tub body at a first moment to obtain a first humidity value;
detecting humidity of the to-be-treated laundry in the tub body at a second moment to obtain a second humidity value;
determining a humidity variation value of the to-be-treated laundry in a first duration according to the first humidity value and the second humidity value, the first duration being a duration from the first moment to the second moment; and
determining the actual condensation efficiency of the condenser according to the humidity variation value, the first duration and the weight of the load.

3. The method of claim 1, wherein acquiring the actual condensation efficiency of the condenser at the drying stabilization stage comprises:
determining that a duration in which a temperature of the gas has been within a preset temperature range reaches a second duration, and detecting an amount of condensed water of the condenser in the second duration; and
determining the actual condensation efficiency of the condenser according to the second duration and the amount of condensed water.

4. The method of claim 1, wherein acquiring the initial temperature of the gas in the laundry treatment device and the weight of the load in the tub body of the laundry treatment device comprises:
detecting temperature of the gas in the laundry treatment device to obtain the initial temperature;
controlling a heating apparatus of the laundry treatment device to be turned on, to heat the gas; and
detecting that the temperature of the gas reaches a preset temperature value, and acquiring the weight of the load in the tub body of the laundry treatment device.

5. The method of claim 4, wherein detecting the temperature of the gas in the laundry treatment device to obtain the initial temperature comprises:
determining to enter a drying process, controlling a motor of the laundry treatment device to be turned on to drive the tub body to rotate, and controlling the heating apparatus of the laundry device not to operate;
determining that a duration of rotation of the tub body reaches a third duration, and detecting the temperature of the gas in the laundry treatment device to obtain a first temperature; and
determining the first temperature as the initial temperature of the gas.

6. The method of claim 4, wherein detecting the temperature of the gas in the laundry treatment device to obtain the initial temperature comprises:
determining to enter a drying process, controlling a motor of the laundry treatment device to be turned on to drive the tub body to rotate, and controlling the heating apparatus of the laundry device not to operate;
detecting the temperature of the gas in the laundry treatment device many times in a third duration, to obtain a plurality of temperature values; and
determining an average value of the plurality of temperature values as the initial temperature of the gas.

7. The method of claim 4, wherein detecting that the temperature of the gas reaches the preset temperature value, and acquiring the weight of the load in the tub body of the laundry treatment device comprise:
detecting that the temperature of the gas reaches the preset temperature value, and acquiring a heating duration of the heating apparatus; and
determining the weight of the load in the tub body according to the heating duration, the initial temperature and the preset temperature value.

8. The method of any one of claims 1 to 7, wherein determining the blockage degree of the condenser according to the reference condensation efficiency and the actual condensation efficiency comprises:
determining a condensation efficiency difference according to the reference condensation efficiency and the actual condensation efficiency;
determining the blockage degree of the condenser as severe blockage, in case that the condensation efficiency difference is greater than a preset efficiency threshold; and
determining the blockage degree of the condenser as slight blockage, in case that the condensation efficiency difference is less than or equal to the preset efficiency threshold.

9. The method of claim 8, further comprising:
detecting humidity in the tub body to obtain a third humidity value;
determining that the third humidity value is less than a drying humidity threshold, and
determining that the drying process ends; and
determining the blockage degree of the condenser as severe blockage, and
controlling an alarm apparatus of the laundry treatment device to output prompt information, wherein the prompt information being configured to prompt a user to clean the condenser.

10. A laundry treatment device, comprising a blockage detection apparatus for a condenser, a heating apparatus, a tub body, a humidity detection apparatus, a temperature detection apparatus, the condenser, and a motor,
the heating apparatus configured to heat gas in the laundry treatment device,
the tub body provided with an air outlet and an air inlet, and configured to accommodate to-be-treated laundry,
the humidity detection apparatus arranged in the tub body, and configured to detect humidity of the to-be-treated laundry,
the temperature detection apparatus configured to detect temperature of the gas in the laundry treatment device,
the condenser configured to condense the gas in the laundry treatment device,
the motor configured to drive the tub body to rotate,
the blockage detection apparatus for a condenser configured to control the heating apparatus, the tub body, the humidity detection apparatus, the temperature detection apparatus, the condenser and the motor to implement a blockage detection method for a condenser of any one of claims 1 to 9.

11. A computer-readable storage medium, having stored thereon a computer-executable instruction, the computer-executable instructions configured to perform a blockage detection method for a condenser of any one of claims 1 to 9.
